# EUROPÄISCHE PATENTSCHRIFT

(11) **EP 3 414 296 B1**
(45) Veröffentlichungstag und Bekanntmachung des Hinweises auf die Patenterteilung: **30.03.2022**
(21) Anmeldenummer: 17704699.2
(22) Anmeldetag: 07.02.2017
(51) Int. Cl.: C09J 153/02, C08L 53/02, C08L 91/00, C09J 7/38

(54) **HAFTKLEBEMASSE, DIESE ENTHALTENDE SELBSTKLEBEPRODUKTE UND VERBUNDE**
PRESSURE-SENSITIVE ADHESIVE, AND SELF-ADHESIVE PRODUCTS AND COMPOSITES COMPRISING THE LATTER
MATIÈRE ADHÉSIVE, PRODUITS AUTOCOLLANTS ET COMPOSITES CONTENANT CELLE-CI

(30) Priorität: 10.02.2016 DE 102016202018
(43) Veröffentlichungstag der Anmeldung: 19.12.2018
(73) Patentinhaber: TESA SE, 22848 Norderstedt (DE)
(72) Erfinder: DOLLASE, Thilo, 22397 Hamburg (DE); OSTERWINTER, Gregor, 22529 Hamburg (DE)
(74) Vertreter: tesa SE
(86) Internationale Anmeldenummer: PCT/EP2017/052617
(87) Internationale Veröffentlichungsnummer: WO 2017/137386

(56) Entgegenhaltungen:
- EP-A1- 0 838 510
- EP-A1- 2 109 647
- WO-A1-2014/189150
- DE-A1-102013 205 673
- US-A1- 2005 197 463

## Beschreibung

Die Erfindung betrifft eine Haftklebemasse, diese enthaltende Selbstklebeprodukte und Verbunde.

Synthesekautschuk basierende Haftklebemassen, die Styrol-Blockcopolymere enthalten, sind hinlänglich bekannt und finden in vielfältigen Anwendungen Einsatz. Vorteile dieser Art von Haftklebemassen sind die hohe Verklebungsfestigkeit auf Untergründen unterschiedlicher Oberflächenenergie und vor allem auch auf Untergründen geringer Oberflächenenergie ("LSE"). Sie bestechen gleichzeitig durch sehr hohe Halteleistungen unter üblichen Umgebungsbedingungen.

Moderne Anwendungen im Bereich der Verklebung von Bauteilen in Mobilgeräten, die durch Selbstklebeprodukte erzeugt werden können, verlangen neben einer Kombination aus hoher Verklebungsfestigkeit und Halteleistung auch eine hohe Wärmescherfestigkeit und Schockbeständigkeit. Hier ist für typische Synthesekautschuk basierende Formulierungen stets weitere Leistungsverbesserung gewünscht. Hohe Verklebungsfestigkeiten werden üblicherweise erreicht, indem einem Synthesekautschuk ein relativ hoher Anteil an Klebharz(en) zugegeben wird. Manche dieser Anwendungen verlangen darüber hinaus die Möglichkeit, eine Klebeverbindung nach einer gewissen Verklebungsdauer wieder zu lösen. Bei jedem Formulierungskonzept sind etwaige Auswirkungen auf das Prozessierungsverhalten zu beachten. Insbesondere für lösungsmittelfreie Verarbeitungsverfahren wie der Hotmeltbeschichtung ist daher das rheologische Verhalten der Formulierung in der Schmelze zu berücksichtigen und kann zu Einschränkungen bei der Formulierungsfreiheit führen.

Unter den Begriff "Mobilgeräte" fallen zum Beispiel Geräte der Consumer-ElektronikIndustrie, zu denen elektronische, optische und feinmechanische Geräte zählen, im Sinne dieser Anmeldung insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)),
wie insbesondere
- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte wie beispielweise Fernseher und dergleichen
- Akustische Aufzeichnungs-, Verarbeitungs-, -übertragungsund -wiedergabegeräte wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion wie beispielweise Telefone, Anrufbeantworter
- Chemische und physikalische Messgeräte, Steuergeräte und Instrumente wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Für diese Geräte sind insbesondere Klebebänder gefordert, die eine hohe Halteleistung besitzen und die auf Wunsch leicht entfernt werden können. In vielen Anwendungen wird zudem eine hohe Festigkeit auch bei erhöhten Temperaturen gefordert.

Des Weiteren ist aber insbesondere wichtig, dass die Klebebänder in ihrer Halteleistung nicht versagen, wenn das Mobilgerät, zum Beispiel ein Handy, fallengelassen wird und auf den Untergrund aufprallt. Der Klebestreifen beziehungsweise der Verklebungsverbund muss also eine sehr hohe Schockresistenz aufweisen.

Haftklebemassen basierend auf Styrol-Blockcopolymeren zählen zu den klassischen Klebemassefamilien, die in Selbstklebeprodukten zur Anwendung kommen. Eine Reihe technologischer Aspekte solche Haftklebemassen betreffend sind zum Beispiel bei D. Satas beschrieben (F. C. Jagisch, J. M. Tancrede in Handbook of Pressure Sensitive Adhesive Technology, D. Satas (Hrsg.), 3. Aufl., 1999, Satas & Associates, Warwick, Rhode Island, Kapitel 16). Es werden unter anderem verschiedene Blockcopolymerarchitekturen vorgestellt, darunter auch mehrarmige (radiale) Strukturen, die die viskosen Eigenschaften der Klebemasseformulierung insbesondere im Hinblick auf die (Hotmelt-)Verarbeitbarkeit positiv beeinflussen können. Ebenso lässt sich die Wärmescherfestigkeit im Vergleich zu einem linearen Blockcopolymer verbessern, was am Beispiel eines Polystyrol-Polyisopren-Systems gezeigt ist. Der Stand der Technik weist weitere Formulierungen auf, die radiale Blockcopolymere enthalten. Hier sind Formulierungen zu finden, die nicht mehr oder oft (zum Teil deutlich) weniger als 50 Gew.-% des das radiale Blockcopolymer umfassenden Elastomerteils nutzen (WO 2008/073669 A1; US 4,944,994 A1; US 5,668,208 A; US 5,372,870 A1; EP 0 991 376 A1; EP 1 013 733 A1).

EP 0 615 433 B1 beschreibt Hotmelt-Klebeformulierungen, die 15 bis 25 Gew.-% eines radialen Blockcopolymers mit einer Molmasse von mindestens 160 000 g/mol enthalten. Zudem sind 30 bis 70 Gew.-% eines Klebharzes und 10 bis 40 Gew.-% eines weichmachenden Öls enthalten. Angegebene Formulierungen weisen stets einen Gesamtelastomergehalt von unterhalb 40 Gew.-% auf.

US 7,906,583 B2 lehrt Mischungen enthaltend ein Elastomergemisch, das ein radiales Styrol-Blockcopolymer enthält. Der Elastomerteil besteht zu 10 bis 55 Gew.-% aus radialem Blockcopolymer und zu 90 bis 45 Gew.-% aus einem Diblockcopolymer. Die Weichblöcke des radialen Blockcopolymers setzen sich aus Polyisopren- und Polybutadien-Segmenten zusammen. Bevorzugt beträgt der Anteil an Diblockcopolymer im Elastomeranteil mindestens 60 Gew.-% oder mehr. Der Klebharzanteil kann mindestens 50 Gew.-% betragen. Zudem sind typischerweise zwischen 5 und 20 Gew.-% eines weichmachenden Öls enthalten. Beispiele führen Formulierungen mit 31 Gew.-% Elastomer, 27 Gew.-% Weichharz und 42 Gew.-% Klebharz auf. Für entsprechende Klebformulierungen wird ein vorteilhaftes Stanzverhalten herausgestellt.

WO 2000/024840 A1 lehrt Haftklebemasseformulierungen mit einem Diblockcopolymer und einem Tri- oder Multiblockcopolymer. Der Anteil an Tri- oder Multiblockcopolymer in Bezug auf den Elastomerteil beträgt 5 Gew.-% bis 60 Gew.-%. Der Elastomerteil innerhalb der Gesamtformulierung beträgt 25 Gew.-% bis 65 Gew.-%. Als besonders vorteilhaft werden 35 Gew.-% bis 50 Gew.-% herausgestellt. Beispiele nennen stets Formulierungen deutlich unterhalb 50 Gew.-% Elastomeranteil. Für entsprechende Haftklebemassen wird eine besonders gute Verklebungsleistung auf unpolaren Untergründen herausgestellt. Auf Schockresistenz wird nicht eingegangen.

US 5,523,343 A1 beschreibt Hotmelt-Klebeformulierungen, die radiale Blockcopolymere enthalten. Der Anteil an Elastomeren in der Formulierung beträgt zwischen 20 Gew.-% und 65 Gew.-% und insbesondere unter 50 Gew.-%. Als besonders vorteilhaft wird hervorgehoben, wenn der Elastomerteil und der Anteil an Klebharz gleich sind oder mengenmäßig mehr Klebharz(e) als Elastomere vorhanden sind. Vorteile einer Formulierung, in der der Elastomerteil gegenüber der Harzkomponente die Majoritätskomponente darstellt, werden nicht herausgestellt.

US 5,183,705 A1 lehrt Haftklebeformulierungen, die ein radiales Blockcopolymer enthalten. In Beispielen werden Elastomeranteile in der Gesamtrezeptur von unterhalb 50 Gew.-% angegeben. Formulierungen enthalten weichmachendes Öl. Der Schrift ist nicht zu entnehmen, dass zusätzlich zum radialen Blockcopolymer planmäßig noch weitere (nicht radiale) Blockcopolymere zum Einsatz kommen. Insbesondere wird kein Einsatzverhältnis des radialen Blockcopolymers innerhalb des Elastomerteils angegeben.

US 4,163,764 A1 offenbart beispielhafte Klebeformulierungen, die ein radiales Blockcopolymer enthalten. Der Anteil an radialem Blockcopolymer in der Formulierung kann zwischen etwa 30 Gew.-% und etwa 70 Gew.-% liegen. Der Schrift ist nicht zu entnehmen, dass zusätzlich zum radialen Blockcopolymer planmäßig noch weitere (nicht radiale) Blockcopolymere zum Einsatz kommen. Insbesondere wird kein Einsatzverhältnis des radialen Blockcopolymers innerhalb des Elastomerteils angegeben.

EP 1 564 273 A1 beschreibt Hotmelt-Klebstoffformulierungen enthaltend ein radiales Blockcopolymer, ein lineares Blockcopolymer, ein Klebharz und einen Weichmacher. Das radiale Blockcopolymer ist zu weniger als 15 Gew.-% enthalten, das lineare Blockcopolymer zu höchstens 20 Gew.-%.

Es besteht die Aufgabe, eine Lösung zu schaffen für Haftklebemassen, die bei hoher Verklebungsfestigkeit eine hohe Wärmescherfestigkeit aufweisen und eine hohe Schockresistenz. Solche Haftklebemassen wären besonders geeignet für Selbstklebeprodukte, über die Verklebungsverbünde insbesondere in Mobilgeräten mit hoher Schockresistenz realisiert werden könnten. Gesucht werden zudem Haftklebemassen, die neben der Kombination aus hoher Wärmescherfestigkeit, hoher Verklebungsfestigkeit und hoher Schockresistenz zusätzlich noch eine gute Reißfestigkeit aufweisen, so dass sich ein Selbstklebeprodukt, das diese Haftklebemasseschicht enthält, durch dehnendes Verstrecken im Wesentlichen zerstörungs- und rückstandfrei aus einem Verklebungsverbund lösen lässt.

Demgemäß betrifft die Erfindung eine blockcopolymerhaltige Haftklebemasse enthaltend
a) 52 Gew.-% bis 65 Gew.-%, bevorzugt 55 Gew.-% bis 62 Gew.-% einer Elastomerkomponente,
b) 30 Gew.-% bis 45 Gew.-%, bevorzugt 35 Gew.-% bis 42 Gew.-% zumindest eines Klebharzes,
c) 0 Gew.-% bis 15 Gew.-%, bevorzugt bis 10 Gew.-% zumindest eines Weichharzes und
d) 0 Gew.-% bis 18 Gew.-%, bevorzugt bis 10 Gew.-% an weiteren Additiven,
wobei die Elastomerkomponente (a) zu mindestens 90 Gew.-% aus Polyvinylaromat-Polybutadien-Blockcopolymeren besteht, wobei die Polyvinylaromat-Polybutadien-Blockcopolymeren zumindest eine Sorte eines Diblockcopolymers (a1) und zumindest eine Sorte eines Tri- oder Multiblockcopolymers (a2) umfassen.

Die eine Sorte des Tri- oder Multiblockcopolymers ist bevorzugt ein mehrarmiges (radiales) Blockcopolymer.

Eine Haftklebemasse ist eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Das zumindest eine Diblockcopolymer (a1) weist einen Vinylaromatenanteil von 15 Gew.-% bis 45 Gew.-% auf.

Vorzugsweise weist Diblockcopolymer (a1) weiterhin eine Molmasse von mindestens 80.000 g/mol auf oder einen Vinylaromatenanteil von 20 Gew.-% bis 40 Gew.-%.

Weiter vorzugsweise betragen die Molmasse mindestens 80.000 g/mol und der Vinylaromatenanteil 20 Gew.-% bis 40 Gew.-%.

Das zumindest eine Tri- oder Multiblockcopolymer (a2), bevorzugt mehrarmige (radiale) Blockcopolymer, weist eine Molmasse von mindestens 125.000 g/mol und einen Vinylaromatenanteil von 15 Gew.-% bis 45 Gew.-% auf.

Bevorzugt betragen die Molmasse mindestens 150.000 g/mol oder der Vinylaromatenanteil 20 Gew.-% bis 40 Gew.-%.

Weiter vorzugsweise beträgt die Molmasse mindestens 150.000 g/mol und der Vinylaromatenanteil 20 Gew.-% bis 40 Gew.-%.

Gemäß einer bevorzugten Ausführungsform sind das zumindest eine Diblockcopolymer (a1) und das zumindest eine Tri- oder Multiblockcopolymer (a2) gleichzeitig wie oben angegeben gewählt.

Innerhalb des Elastomerteils (a) beträgt der Anteil an Tri- oder Multiblockcopolymer (a2) zwischen 25 Gew.- % und 50 Gew.-%, bevorzugt zwischen 30 Gew.-% und 45 Gew.-%. Ein zu hoher Anteil an hochmolekularem Blockcopolymer führt zu einer Abnahme der Verklebungsfestigkeit. Zudem zeigt sich auch eine erschwerte Verarbeitbarkeit (zum Beispiel Beschichtung, insbesondere wenn lösemittelfrei vorgegangen wird). Ein zu geringer Anteil dagegen hat eine nicht ausreichende Wärmescherfestigkeit zur Folge.

Der übrige Anteil des Elastomerteils (a) umfasst das zumindest eine Diblockcopolymer (a1), kann aber vorteilhaft zusätzlich ein weiteres Polyvinylaromat-Polybutadien-Blockcopolymer (a3) enthalten, das im Rohzustand eine Zugfestigkeit von mindestens 25 MPa (nach ISO 37) und eine Molmasse von höchstens 120 000 g/mol aufweist.

Kommt ein Blockcopolymer (a3) zum Einsatz, dann beträgt der Anteil innerhalb des Elastomerteils (a) vorzugsweise höchstens 35 Gew.-%, besonders bevorzugt höchstens 25 Gew.-%.

Der Zusatz des Blockcopolymers (a3) führt zu einer Steigerung der Reißfestigkeit, was insbesondere für ein Lösen der Verklebung durch dehnendes Verstrecken wichtig ist. Ein zu hoher Anteil jedoch führt zu einer Absenkung der Wärmescherfestigkeit und der Schockresistenz.

Das zumindest eine Diblockcopolymer (a1) ist also zu 75 Gew.-% bis 5 Gew.-% im Elastomerteil (a) enthalten.

Das Einsatzverhältnis von Elastomerkomponente (a) zu Harzkomponente [(b) + (c)] liegt vorzugsweise bei 1,20 : 1,00 bis 2,00: 1,00, bevorzugt bei 1,35 : 1,00 bis 1,80: 1,00, weiter bevorzugt bei 1,50 : 1,00 bis 1,75: 1,00. Es hat sich nämlich gezeigt, dass die Anforderung an Schockbeständigkeit besonders gut erfüllt werden kann, wenn die Elastomerkomponente (a) innerhalb der Haftklebemasseformulierung gegenüber der Harzkomponente [(b) + (c)] die Majoritätskomponente darstellt. Das Einsatzverhältnis von Klebharzkomponente (b) in Harzkomponente [(b) + (c)] liegt vorzugsweise bei mindestens 70 Gew.-%, bevorzugt bei mindestens 80 Gew.-%, bis 100 Gew.-%. Ein zu hoher Weichharzanteil führt zu einer Reduktion der Wärmescherfestigkeit.

Erfindungsgemäß sind zudem Selbstklebeprodukte, die zumindest eine Schicht einer solchen Haftklebemasse enthalten.

Erfindungsgemäß sind zudem Selbstklebeprodukte, die zumindest eine Schicht einer solchen Haftklebemasse enthalten und sich durch dehnendes Verstrecken im Wesentlichen rückstandsfrei aus einer Verklebung lösen lassen.

Erfindungsgemäße Klebemassen erfüllen aus dem folgenden Anforderungskatalog die gelisteten Kriterien zur Verklebungsfestigkeit und Schockresistenz. Vorzugsweise erfüllen erfindungsgemäße Klebemassen alle drei Kriterien des folgenden Anforderungskatalogs:

| *Anforderung* | *Eigenschaft* | *Leistungsvermögen* | *Prüfme th ode* |
|---|---|---|---|
| Verklebungsfestigkeit | Klebkraft (Stahl) | ≥ 5,0 N/cm, bevorzugt ≥ 6,5 N/cm, sehr bevorzugt ≥ 8,0 N/cm | Test I |
| Wärmescherfestigkeit | SAFT | ≥ 135 °C, bevorzugt ≥ 140 °C, sehr bevorzugt ≥ 145 °C | Test II |
| Schockwiderstand | Ball Drop | ≥ 180 cm, bevorzugt ≥ 220 cm, sehr bevorzugt ≥ 250 cm | Test III |

### Elastomerkomponente (a)

Als Elastomerkomponente (Blockcopolymerkomponente) kommen insgesamt zu mindestens 90 Gew.-% zumindest eine Sorte eines Diblockcopolymers (a1) und zumindest eine Sorte eines Tri- oder Multiblockcopolymers (a2), insbesondere ein mehrarmiges (radiales) Blockcopolymer, zum Einsatz. Optional kommt zusätzlich eine weitere Sorte eines Blockcopolymers (a3) zum Einsatz. Unabhängig voneinander handelt es sich bei (a1), (a2) und (a3) um Polybutadien-Polyvinylaromaten-Blockcopolymere oder ein Gemisch aus verschiedenen Polybutadien-Polyvinylaromaten-Blockcopolymeren. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solchen überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie zum Beispiel Ozon im Vergleich zu Polyisopren-Blockcopolymeren (SIS) bevorzugt. Mittels SBS-Polymeren können auch die gestellten Anforderungen besser erfüllt werden als mit SIS-Polymeren. Ergänzend können aber auch SIS-Polymere eingesetzt werden. Polybutadien-Polyvinylaromaten-Blockcopolymere werden für die vorliegende Erfindung ausgewählt, die, wie aus dem Stand der Technik dem Fachmann bekannt, im Rohzustand eine mehr- (zwei-)phasige Morphologie ausbilden.

Das Elastomergemisch (a) enthält entsprechend zumindest ein Polybutadien-Polyvinylaromaten-Blockcopolymer bestehend aus einem A-Block und einem B-Block, dem sogenannten Diblockcopolymer (a1). Diblockcopolymere tragen zu Tack und Auffließvermögen der Klebemasse bei. Diblockcopolymere enthalten für die B-Blöcke freie Kettenenden, was für die Schockresistenz als wichtig angenommen werden kann. Der Anteil an Vinylaromaten in den Diblockcopolymeren liegt zwischen 20 Gew.-% bis 45 Gew.-%, bevorzugt zwischen 25 Gew.-% bis 40 Gew.-%. Die Molmasse des Diblockcopolymers liegt bevorzugt bei mindestens 80 000 g/mol.

Die Elastomerkomponente (a) enthält zudem ein Triblockcopolymer oder ein höheres Multiblockcopolymer (a2), bevorzugt ein mehrarmiges (radiales) Blockcopolymer mit zumindest zwei A-Blöcken und zumindest einem B-Block. Auch hier sind A-Blöcke aus Polyvinylaromaten gebildet und B-Blöcke aus Polybutadien. Dieses Blockcopolymer weist die allgemeine Struktur
A-B-A, (A-B)ₙ, (A-B)ₙX oder (A-B-A)ₙX auf,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von Butadien, oder für ein teilhydriertes Derivat eines solchen Polymers;
- X für den Rest eines Kopplungsreagenzes oder Initiators und
- n für eine ganze Zahl ≥ 2, insbesondere 3 oder 4 steht.

Besonders vorteilhaft einsetzbar sind Blockcopolymere von radialer Gestalt sowie sternförmige und lineare Multiblockcopolymere.

Triblock- und Multiblockcopolymere und insbesondere mehrarmige (radiale) Blockcopoymere tragen zu Kohäsion und Zugfestigkeit der Klebemasse bei sowie zur Wärmescherfestigkeit. Der Anteil an Vinylaromaten in den Tri- oder Multiblockcopolymeren (a2) liegt zwischen 20 Gew.-% bis 45 Gew.-%, bevorzugt von 25 Gew.-% bis 40 Gew.-%. Die Molmasse des Tri- oder Multiblockcopolymers liegt bei mindestens 125.000 g/mol, bevorzugt bei mindestens 150.000 g/mol. Durch Einsatz von Blockcopolymeren der Sorte (a2) lässt sich überraschenderweise die Schockresistenz verbessern. Bei einer zu geringen Molmasse ist die Anforderung an Schockresistenz nicht zu erreichen.

Die Elastomerkomponente (a) enthält optional zudem ein Triblockcopolymer (a3) mit zwei A-Blöcken und einem B-Block mit einer resultierenden Struktur A-B-A. Dabei handelt es sich ebenfalls um ein Polybutadien-Polyvinylaromaten-Blockcopolymer. Dieses Blockcopolymer weist im Rohzustand eine Zugfestigkeit von mindestens 25 MPa (ermittelt nach ISO 37) auf und eine Molmasse von höchstens 120 000 g/mol. Der Anteil an Vinylaromaten in dem Triblockcopolymer (a3) liegt bei 25 Gew.-% bis 45 Gew.-%. Über das Triblockcopolymer (a3) kann die Zugfestigkeit der Formulierung gesteuert werden, was insbesondere bei bestimmten Produktausführungen (insbesondere Transfertapes) vorteilhaft ist, bei denen durch dehnendes Verstrecken im Wesentlichen rückstandsfrei ein Lösen aus einem Verklebungsverbund gewünscht ist.

Es können mehrere verschiedene Diblockcopolymere eingesetzt werden. Es können mehrere Triblock- und/oder Multiblockcopolymere eingesetzt werden. Der Gesamtblock¬copolymergehalt oder Elastomeranteil (a) in der Klebemasse liegt bei mindestens 52 Gew.-% und bei höchstens 65 Gew.-%, bevorzugt bei mindestens 55 Gew.-% und höchstens 62 Gew.-%. Deutlich geringere Anteile an Elastomer führen zu nicht ausreichender Kohäsion, was sich in reduzierter Wärmescherfestigkeit und/oder reduzierter Reißfestigkeit beim unter dehnendem Verstrecken durchgeführten Ablöseprozess äußern kann, sowie zu einer Verringerung der Schockresistenz. Deutlich höhere Anteile an Elastomer führen zu einem Abfall an Verklebungsfestigkeit.

Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-% bis 45 Gew.-%, bevorzugt von 25 Gew.-% bis 40 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Wärmescherfestigkeit und die Reißfestigkeit wichtig. Bei einem zu hohen Polyvinylaromatenanteil dagegen verliert die Klebemasse an Klebrigkeit. Polyvinylaromaten, die nicht Teil von Blockcopolymeren sind, liegen in erfindungsgemäßen Formulierungen vorzugsweise zu höchstens etwa 5 Gew.-% vor. Erfindungsgemäße Formulierungen sind insbesondere im Wesentlichen frei von Polyvinylaromaten, die nicht Teil von Blockcopolymeren sind.

Vorzugsweise besitzen die Blockcopolymere der Haftklebmassen als A-Blöcke Polystyrol-Endblöcke. Anstelle der bevorzugten Polystyrol-Blöcke können als Vinylaromaten auch Polymerblöcke auf Basis anderer aromatenhaltiger Homo- und Copolymere (bevorzugt C₈-bis C₁₂-Aromaten) genutzt werden wie zum Beispiel α-methylstyrolhaltige Aromatenblöcke. Weiterhin können auch gleiche oder unterschiedliche A-Blöcke enthalten sein.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke bis zu höchstens -50 °C insbesondere höchstens -80 °C) wider. Diese Angaben beziehen sich auf die reinen, unabgemischten Blockcopolymere und können zum Beispiel mittels DSC (Test IV) ermittelt werden.

Die aus den A- und B-Blöcken resultierenden Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans und 1,2-vinyl; bevorzugt wird ein 1,4-Anteil (cis + trans) von > 75 mol-%, sehr bevorzugt von > 85 mol-% bezogen auf die Polybutadienblöcke und ein 1,4-cis-Anteil von > 40 mol-% bezogen auf die Polybutadienblöcke) und/oder Kettenlänge. Ein hoher Anteil an 1,4-Verknüpfung und insbesondere 1,4-cis-Verknüpfung der Monomereinheiten in den Polybutadien-Blöcken führt zu vorteilhafter Zug/Dehnungs-Charakteristik, so dass eine ausreichende Dehnbarkeit resultiert, die insbesondere für das unter Dehnung rückstandsfreie Wiederablösen wichtig ist. Zudem liegt die Glasübergangstemperatur der so gestalteten Weichblöcke vorteilhaft niedrig, so dass eine gute Schockresistenz erreicht werden kann. Die 1,2-Einheiten können hydriert sein. Die 1,4-Einheiten sind vorteilhafterweise im Wesentlichen nicht hydriert.

Kommerziell erhältliche Blockcopolymer-Typen weisen häufig eine Kombination aus Polymeren unterschiedlicher Architektur auf. So enthält beispielsweise Kraton D1101, nominell ein lineares Polystyrol-Polybutadien-Triblockcopolymer, gemäß Herstellerangabe (The Global Connection for Polymer and Compound Solution - Product and Application Guide, Kraton Performance Polymers, 2011) zu 16 Gew.-% ein Diblockcopolymer. Kraton D1118 dagegen, ein anderes Polystyrol-Polybutadien-Blockcopolymer, zu 78 Gew.-% ein Diblockcopolymer. Die oben gemachten Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen. GPC (Test VI) erlaubt üblicherweise die Feststellung der Molmasse der einzelnen Polymermoden in einer Mischung aus verschiedenen Blockcopolymeren. Die Angaben zu Anteilen an Blockcopolymer (a2) in der Elastomerkomponente (a) ergeben sich aus der Zusammensetzung (Diblock- zu höhermolekularem linearen und/oder radialen Blockcopolymer) der eingesetzten Elastomertype. Kraton D1118 beispielsweise trägt entsprechend der oben gemachten Zahlenwerte zu 78 Gew.-% zur Blockcopolymerkomponente (a1) und zu 22 Gew.-% zur Blockcopolymerkomponente (a2) bei.

### Klebharzkomponente (b)

Klebharze sind spezielle Verbindungen mit im Vergleich zu den Elastomeren niedriger Molmasse, üblicherweise mit einem gewichtsmittleren Molekulargewicht (Test VII) MW < 5.000 g/mol. Typischerweise beträgt das gewichtsmittlere Molekulargewicht von 500 bis 5.000 g/mol, bevorzugt von 500 bis 2.000 g/mol. Das zumindest eine Klebharz weist einen DACP-Wert (nach Test VI) von mindestens etwa +5 °C und höchstens etwa +50°C, bevorzugt von höchstens etwa +45 °C, sowie einen MMAP-Wert (nach Test VI) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test VIII) von mindestens etwa +90 °C, bevorzugt von mindestens etwa +110 °C, und höchstens +140 °C, bevorzugt von höchstens +120 °C auf.

Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Wärmescherfestigkeit führen kann. Zu geringe Polarität (zu hohe DACP-Werte) führt zu Inkompatibilität des Klebharzes mit dem Weichblock und damit zu einem Verlust von Verklebungsfestigkeit.

Zu hohe Aromatizität (zu geringe MMAP-Werte) führt zu beginnender Verträglichkeit mit den Vinylaromatenblöcken, was zu Reduktion der Kohäsion und damit der Wärmescherfestigkeit führen kann. Zu geringe Aromatizität (zu hohe MMAP-Werte) führt zu Inkompatibilität des Klebharzes mit dem Weichblock und damit zu einem Verlust von Verklebungsfestigkeit.

Die Harze werden bevorzugt aus den Harzklassen der (teil)hydrierten aromatisch modifizierten C₅-Harze, der Polyterpen-Harze (hergestellt aus α-Pinen, β-Pinen, δ-Limonen oder Gemischen dieser Ausgangsstoffe), der teilhydrierten C₉-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Weitere Klebharze sind C₉-modifizierte C₅-Harze in ihrer nicht-, teil- oder vollhydrierten Form sowie C₅-Harze in ihrer nicht-, teiloder vollhydrierten Form. Polyterpen-Harze werden bevorzugt.

Der Anteil an Klebharz(en) (b) in der Haftklebemasseformulierung wirkt sich auf die Verklebungsfestigkeit aus. Daher sollte der Klebharzanteil nicht zu gering sein. Es hat sich allerdings gezeigt, dass ein zu hoher Anteil an Klebharz(en) einen negativen Einfluss auf die Wärmescherfestigkeit und die Schockresistenz hat. Das Einsatzverhältnis von Elastomerkomponente (a) zu Harzkomponente [(b) + (c)] liegt daher im Sinne dieser Erfindung vorzugsweise bei 1,20 : 1,00 bis 2,00 : 1,00, bevorzugt bei 1,35 : 1,00 bis 1,80 : 1,00, weiter bevorzugt bei 1,50 : 1,00 bis 1,75 : 1,00. Das Einsatzverhältnis von Klebharzkomponente (b) in Harzkomponente [(b) + (c)] liegt bei mindestens 70 Gew.-%, bevorzugt bei mindestens 80 Gew.-%, bis 100 Gew.-%.

### Weichharzkomponente (c)

Das optional einsetzbare Weichharz dient zur finalen Feineinstellung der Kohäsions/Ad¬häsions-Balance. Es handelt sich dabei sehr bevorzugt um ein Weichharz oder Weich¬harzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test IX bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von 0 Gew.-%, bevorzugt von mindes¬tens 2 Gew.-% und höchstens 15 Gew.-%, besonders bevorzugt höchstens 10 Gew.-%, bezogen auf die Gesamtklebemasse-zusammensetzung zum Einsatz. Ein zu hoher Anteil an Weichharz führt zu einer Verringerung der Kohäsion, was sich auf die Wärmescherfestigkeit negativ auswirkt.

Übliche niederviskose Weichmacher wie Mineralöle sind im Sinne dieser Erfindung nicht vorteilhaft, können aber ebenfalls eingesetzt werden. Ihr Anteil in der Gesamtrezeptur liegt dann vorzugsweise bei unterhalb 5 Gew.-%, sehr bevorzugt wird auf solche Weichmacher vollständig verzichtet. Nachteilig an Weichmachern geringer Viskosität ist die Gefahr der Migration in mit der Haftklebemasseschicht in Kontakt stehende Schichten.

### Optionale weitere Bestandteile (d)

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt aber auch Füllstoffe, Farbstoffe und Pigmente. Die Klebemasse kann so beliebig gefärbt oder weiß, grau oder schwarz sein.

Als solche oder andere weitere Additive können typischerweise genutzt werden:
- Plastifizierungsmittel wie zum Beispiel Weichmacheröle (bevorzugt sind erfindungsgemäße Formulierungen im Wesentlichen frei von Weichmacherölen), oder niedermolekulare flüssige Polymere, wie zum Beispiel niedermolekulare Polybutene, vorzugsweise mit einem Anteil von 0,2 bis unter 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse,
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse,
- Prozessstabilisatoren wie zum Beispiel C-Radikalfänger,
   vorzugsweise mit einem Anteil von 0,2 bis 1 Gew.-% bezogen auf das Gesamtgewicht der Haftklebemasse,
- Lichtschutzmittel wie zum Beispiel UV-Absorber oder sterisch gehinderte Amine,
   vorzugsweise mit einem Anteil von 0,2 bis 1 Gew.-% bezogen auf das Gesamtgewicht der Haftklebemasse,
- Verarbeitungshilfsmittel,
   vorzugsweise mit einem Anteil von 0,2 bis 1 Gew.-% bezogen auf das Gesamtgewicht der Haftklebemasse
- Endblockverstärkerharze,
   falls gewünscht vorzugsweise mit einem Anteil von 0,2 bis 10 Gew.-% bezogen auf das Gesamtgewicht der Haftklebemasse (sehr bevorzugt sind erfindungsgemäße Formulierungen im Wesentlichen frei von Endblockverstärkerharzen) sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren und auch Polystyrol-Polyisopren-Blockcopolymere oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden. Durch die spezielle Auswahl von Art und Menge der Blockcopolymere in der Elastomerkomponente (a) in erfindungsgemäßen Formulierungen wird eine Steigerung der Wärmescherfestigkeit erreicht. Es kann daher im Sinne dieser Erfindung vorteilhaft auf den Einsatz von sogenannten Endblockverstärkerharzen, wie es oft im Stand der Technik als Konzept zur Steigerung von Wärmescherfestigkeit vorgeschlagen wird, verzichtet werden. Zusatz von Endblockverstärkerharzen hat typischerweise einen negativen Einfluss auf Anfassklebrigkeit, Tack und/oder Klebkraft. Ebenso liegt der Anteil von aromatischen Polymeren wie er zum Beispiel aus den Blockcopolymer-Rohstoffen in die Formulierung eingetragen werden kann, bei höchstens etwa 5 Gew.-%.

Erfindungsgemäß ist es auch, wenn die Klebemasse einige oder sogar alle der genannten Zuschlagstoffe jeweils nicht aufweist.

Eine besonders vorteilhafte Formulierung im Sinne der vorliegenden Erfindung enthält zumindest ein Diblockcopolymer (a1), zumindest ein Triblock- und/oder Multiblockcopolymer (a2), zumindest ein Klebharz (b), aber im Wesentlichen kein Weichharz (c), im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine weitere besonders vorteilhafte Formulierung im Sinne der vorliegenden Erfindung enthält zumindest ein Diblockcopolymer (a1), zumindest ein mehrarmiges (radiales) Blockcopolymer (a2), zumindest ein Klebharz (b), aber im Wesentlichen kein Weichharz (c), im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine dritte besonders vorteilhafte Formulierung im Sinne der vorliegenden Erfindung enthält zumindest ein Diblockcopolymer (a1), zumindest ein Triblock- und/oder Multiblockcopolymer (a2), zumindest ein Klebharz (b), zumindest ein Weichharz (c), aber im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine vierte besonders vorteilhafte Formulierung im Sinne der vorliegenden Erfindung enthält zumindest ein Diblockcopolymer (a1), zumindest ein mehrarmiges (radiales) Blockcopolymer (a2), zumindest ein Klebharz (b), zumindest ein Weichharz (c), aber im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine fünfte vorteilhafte Formulierung im Sinne der vorliegenden Erfindung enthält zumindest ein Diblockcopolymer (a1), zumindest ein Triblock- und/oder Multiblockcopolymer (a2), zumindest ein Blockcopolymer (a3), zumindest ein Klebharz (b), aber im Wesentlichen kein Weichharz (c), im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine sechste besonders vorteilhafte Formulierung im Sinne der vorliegenden Erfindung enthält zumindest ein Diblockcopolymer (a1), zumindest ein mehrarmiges (radiales) Blockcopolymer (a2), zumindest ein Blockcopolymer (a3), zumindest ein Klebharz (b), aber im Wesentlichen kein Weichharz (c), im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine siebente besonders vorteilhafte Formulierung im Sinne der vorliegenden Erfindung enthält zumindest ein Diblockcopolymer (a1), zumindest ein Triblock- und/oder Multiblockcopolymer (a2), zumindest ein Blockcopolymer (a3), zumindest ein Klebharz (b), zumindest ein Weichharz (c), aber im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Eine achte besonders vorteilhafte Formulierung im Sinne der vorliegenden Erfindung enthält zumindest ein Diblockcopolymer (a1), zumindest ein mehrarmiges (radiales) Blockcopolymer (a2), zumindest ein Blockcopolymer (a3), zumindest ein Klebharz (b), zumindest ein Weichharz (c), aber im Wesentlichen kein weichmachendes Öl, weniger als etwa 5 Gew.-%, vorzugsweise im Wesentlichen kein Vinylaromatenpolymer, das nicht in ein Blockcopolymer eingebaut ist, und im Wesentlichen kein Endblockverstärkerharz.

Die vorliegende Erfindung schlägt blockcopolymerhaltige Formulierungen für Haftklebemassen mit guter Verklebungsfestigkeit bei gleichzeitig gesteigerter Wärmescherfestigkeit und trotzdem verbesserter Schockresistenz vor. Sie enthalten einen speziell ausbalancierten Anteil zumindest eines hochmolekularen Tri- oder Multiblockcopolymers, insbesondere eines mehrarmigen (radialen) Blockcopolymers.

Die Erfindung betrifft zudem Selbstklebeprodukte, die zumindest eine Schicht einer erfindungsgemäßen Haftklebemasse enthalten. Insbesondere vorteilhaft sind erfindungsgemäße Klebemassen in Selbstklebeprodukten, die sich durch dehnendes Verstrecken im Wesentlichen rückstandsfrei aus einer Verklebung herauslösen lassen, so genannte Selbstklebestrips.

Schließlich erstreckt sich die Erfindung auch auf Klebeverbunde, die durch Verwendung von Selbstklebeprodukten, die zumindest eine Schicht einer erfindungsgemäßen Haftklebemasse enthalten, erhalten wurden, also einen Verbund aus einem Haftklebestreifen und zwei Bauteilen eines Mobilgerätes, die mit dem Haftklebestreifen verbunden sind.

Die Herstellung der Formulierungen und der daraus erzeugten Beschichtungen beziehungsweise Selbstklebeprodukten kann unter Verwendung organischer Lösemittel oder lösemittelfrei erfolgen.

Entsprechend ist das Verfahren zur Herstellung einer Schicht einer erfindungsgemäßen Haftklebeformulierung Gegenstand der Erfindung, indem das flächige Haftmittel aus der erfindungsgemäßen Haftklebemasse zu mindestens einer Schicht mit einer Schichtdicke zwischen 10 µm und 1500 µm, bevorzugt zwischen 25 µm und 800 µm geformt wird. Beispielschichtdicken, die über diese Verfahren erzeugt werden, liegen bei 50 µm, 75 µm, 100 µm, 150 µm, 200 µm, 250 µm, 400 µm, 500 µm, 600 µm und 700 µm.

In einer günstigen Ausgestaltung des erfindungsgemäßen Verfahren wird die Haftklebeschicht geformt, indem
- die erfindungsgemäße Haftklebemasse zunächst lösemittelfrei aus den Rohstoffen compoundiert wird, was batchweise zum Beispiel in einem Kneter oder Innenmischer erfolgen kann oder kontinuierlich zum Beispiel in einem Doppelschnecken- oder Planetwalzenextruder,
- der Compound (die erfindungsgemäße Haftklebemasse) durch Erwärmen in einen ausreichend weichen Zustand gebracht wird, damit er förderbar ist,
- die erfindungsgemäße Haftklebemasse inline oder offline auf ein Substrat aufgetragen wird, wobei die Haftklebemasse zu mindestens einer Schicht mit einer Schichtdicke von größer gleich 10 µm und bis zu 1500 µm aufgetragen wird,
- die Haftklebemasseschicht abgekühlt wird und
- ein Selbstklebeprodukt oder ein Zwischenprodukt des Selbstklebeprodukts gemäß der vorliegenden Erfindung gewonnen wird.

In einer günstigen weiteren Ausgestaltung des erfindungsgemäßen Verfahren wird das flächige Haftmittel geformt, indem
- eine Lösung der erfindungsgemäßen Haftklebemasse in Lösungsmittel durch Auflösen beziehungsweise Dispergieren der Rohstoffe hergestellt wird,
- die Lösung der erfindungsgemäßen Haftklebemasse auf ein Substrat aufgetragen wird, wobei die Haftklebemasse zu mindestens einer Schicht mit einem Flächengewicht nach Trocknung von größer gleich 10 µm und bis zu 250 µm aufgetragen wird,
- die Schicht der Lösung der Haftklebemasse von Lösungsmittel getrocknet wird und
- ein Selbstklebeprodukt oder eine Zwischenprodukt des Selbstklebeprodukts gemäß der vorliegenden Erfindung gewonnen wird.

Bevorzugt ist im erfindungsgemäßen Verfahren das Substrat ein Flächenelement, insbesondere ein Trägermaterial, eine Folie, ein Releaseliner, ein Transfermaterial und/oder ein Deckmaterial. Substrate können auch die Oberflächen der Fertigungsstraße im Herstellungsverfahren sein. Dabei wird eine Schichtdicke der Haftklebemasse der zu mindestens einen Haftklebe¬masseschicht von größer gleich 10 µm verarbeitet und die flächig aufgebrachte Haftklebemasseschicht wird optional getrocknet beziehungsweise die Lösemittel werden entfernt. Bevorzugt wird eine lösungsmittelfreie Schmelzklebemasse verarbeitet.

Zum Auftragen der Haftklebemasse können unter anderem als Beschichtungsverfahren der erfindungsgemäß verwendeten Flächenelemente Rakelverfahren, Düsenrakelverfahren, Rollstabdüsenverfahren, Extrusionsdüsenverfahren, Giessdüsenund Giesserverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Bevorzugt werden Hotmeltverfahren (Extrusion, Düse).

Gegebenenfalls werden weitere Schichten oder Materiallagen anschließend inline oder offline zukaschiert oder beschichtet, so dass auch mehrschichtige /-lagige Produktaufbauten erzeugt werden können.

In einer weiteren Ausgestaltung des erfindungsgemäßen Verfahrens wird die erhaltene Kombination aus Flächenelement und Haftklebemasse zu Meterware umfassend Bänder zugeschnitten und/oder Stanzlinge ausgestanzt und optional werden die Bänder zu einer Banderole aufgerollt.

Erfindungsgemäße Formulierungen kommen in Selbstklebeprodukten zum Einsatz. Diese Selbstklebeprodukte können als Klebefolie, Klebeband oder Klebestanzling ausgestaltet sein. Die Selbstklebeprodukte enthalten zumindest eine Schicht der erfindungsgemäßen Formulierung. Diese Schicht kann eine Schichtdicke aufweisen zwischen 10 µm und 1500 µm, bevorzugt zwischen 25 µm und 800 µm.Beispielschichtdicken liegen bei 50 µm, 75 µm, 100 µm, 150 µm, 200 µm, 250 µm, 400 µm, 500 µm, 600 µm und 700 µm.Die Selbstklebeprodukte können einseitig klebend oder beidseitig klebend ausgestaltet sein. Besonders gut lassen sich die Vorzüge der erfindungsgemäßen Formulierungen in doppelseitig klebenden Selbstklebeprodukten nutzen, wenn zwei Bauteile und insbesondere in einem Mobilgerät miteinander verklebt werden sollen.

Unter Verwendung zumindest einer erfindungsgemäßen Haftklebemasseformulierung hergestellte Selbstklebebänder können gestaltet sein als
- einschichtige, beidseitig selbstklebende Klebebänder sogenannte "Transfertapes" aus einer einzigen Schicht einer erfindungsgemäßen Haftklebeformulierung;
- mehrschichtige beidseitig selbstklebende Klebebänder, bei denen die Schichten jeweils aus den erfindungsgemäßen Haftklebemassen bestehen oder einer erfindungsgemäßen Haftklebemasse und einer nicht erfindungsgemäßen Haftklebemasse;
- beidseitig selbstklebend ausgerüstete Klebebänder mit einem Zwischenträger (ein sogenannter Permanentträger), der entweder in einer Klebemassenschicht oder zwischen zwei Klebemassenschichten angeordnet ist.

Bevorzugt sind einschichtige, beidseitig selbstklebende Produkte aus einer einzigen Schicht einer erfindungsgemäßen Haftklebemasse.

Bevorzugt ist zudem eine Ausführungsform des Selbstklebeprodukts, bei dem der Zwischenträger nur aus einer einzigen Schicht aus einer Polymerfolie besteht.

Dabei können die doppelseitigen Produkte einen symmetrischen oder einen asymmetrischen Produktaufbau aufweisen.

Vom erfinderischen Gedanken umfasst sind Aufbauten mit einem dehnbaren Zwischenträger innerhalb des Selbstklebeprodukts, insbesondere in der Mitte der einzigen Haftklebemassenschicht, wobei die Dehnbarkeit des Zwischenträgers ausreichend sein muss, um ein Ablösen des Klebstreifens durch dehnendes Verstrecken zu gewährleisten. Ein drittes Blockcopolymer (a3) ist in dieser Ausgestaltung zwar einsetzbar, aber nicht in jedem Fall notwendig. Entsprechend umfasst eine erfindungsgemäße Ausgestaltung einen dehnbaren Träger und eine Haftklebemasseschicht mit einer Zusammensetzung, die kein Blockcopolymer der Sorte (a3) enthält. Als Zwischenträger können zum Beispiel sehr dehnfähige Folien dienen. Eine maximale Dehnbarkeit der Folie von mindestens 250 %, bevorzugt von mindestens 400 % (ISO 527-3) ist vorteilhaft. Beispiele für vorteilhaft einsetzbare dehnbare Zwischenträger sind transparente Ausführungen aus WO 2011/124782 A1, DE 10 2012 223 670 A1, WO 2009/114683 A1, WO 2010/077541 A1, WO 2010/078396 A1.

Zur Herstellung der dehnbaren Zwischenträgerfolie werden filmbildende oder extrusionsfähige Polymere eingesetzt, die zusätzlich mono- oder biaxial orientiert sein können.

In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Ferner lassen sich Polyurethane vorteilhaft als Ausgangsmaterialien für dehnbare Zwischenträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Dem Fachmann sind weitere Rohstoffe bekannt, aus denen erfindungsgemäße Zwischenträgerschichten aufgebaut werden können. Weiterhin ist es vorteilhaft, Kautschuk basierende Materialien in Zwischenträgerschichten einzusetzen, um Dehnbarkeit zu realisieren. Als Kautschuk oder Synthesekautschuk oder daraus erzeugten Verschnitten als Ausgangsmaterial für dehnbare Zwischenträgerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Zwischenträgerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[α]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Zwischenträgermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind bahnförmige Schaumstoffe (beispielsweise aus Polyethylen und Polyurethan) geeignet.

Die Zwischenträger können mehrlagig ausgestaltet sein.

Des Weiteren können die Zwischenträger Deckschichten aufweisen, beispielsweise Sperrschichten, die ein Eindringen von Komponenten aus der Klebemasse in den Zwischenträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Zwischenträger können die Zwischenträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Zwischenträgers kann einer antiadhäsiven physikalischen Behandlung oder Beschichtung unterzogen sein.

Vom erfinderischen Gedanken umfasst sind zudem Aufbauten mit einem Zwischenträger eines hohen Elastizitätsmoduls und geringer Dehnbarkeit innerhalb des Selbstklebeprodukts, insbesondere in der Mitte der einzigen Haftklebemassenschicht, wobei der Elastizitätsmodul des Zwischenträgers vorteilhaft bei mindestens 750 MPa, bevorzugt bei mindestens 1 GPa (ISO 527-3) liegt und die maximale Dehnbarkeit (nach ISO 527-3) bei höchstens 200 % liegt. Solche Aufbauten sind besonders gut in Stanzprozessen einsetzbar und erleichtern die Handhabbarkeit im Applikationsprozess. Auch sind solcher Art gestaltete Permanentträger von Vorteil, wenn ein Wiederablösen des Selbstklebeprodukts durch Schälen ermöglicht werden soll. Ein drittes Blockcopolymer (a3) ist in dieser Ausgestaltung zwar einsetzbar aber nicht in jedem Fall notwendig. Entsprechend umfasst eine erfindungsgemäße Ausgestaltung einen Träger geringer Dehnbarkeit und eine Haftklebemasseschicht mit einer Zusammensetzung, die kein Blockcopolymer der Sorte (a3) enthält.

Zur Herstellung solcher Zwischenträgerfolien werden filmbildende oder extrusionsfähige Polymere eingesetzt, die insbesondere zusätzlich mono- oder biaxial orientiert sein können.

Als Folienmaterial für die zumindest eine Lage einer Folie für diese Auslegungsform bieten sich insbesondere Polyesterfolien und hier besonders bevorzugt Folien auf Basis von Polyethylenterephthalat (PET) an. Polyesterfolien sind bevorzugt biaxial verstreckt. Weiterhin sind Folien aus Polyolefinen, insbesondere aus Polybuten, Cyclo-Olefin-Copolymer, Polymethylpenten, Polypropylen oder Polyethylen, zum Beispiel aus monoaxial verstrecktem Polypropylen, biaxial verstrecktem Polypropylen oder biaxial verstrecktem Polyethylen denkbar. Diese Aufzählung soll Beispiele aufzeigen, dem Fachmann sind weitere Systeme bekannt, die dem Gedanken der vorliegenden Erfindung entsprechen.

Zur Herstellung eines Zwischenträgermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Die Zwischenträger können mehrlagig ausgestaltet sein.

Des Weiteren können die Zwischenträger Deckschichten aufweisen, beispielsweise Sperrschichten, die ein Eindringen von Komponenten aus der Klebemasse in den Zwischenträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Zwischenträger können die Zwischenträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Zwischenträgers kann einer antiadhäsiven physikalischen Behandlung oder Beschichtung unterzogen sein.

Die Dicke der Zwischenträgerschicht, unabhängig von ihrer Dehnbarkeit, liegt dabei im Bereich von 10 bis 200 µm, bevorzugt zwischen 20 und 100 µm.

Schließlich kann das Selbstklebeprodukt ein- oder beidseitig mit einem Liner, also einem temporären Träger, der ein- oder beidseitig antiadhäsiv beschichtetet ist, eingedeckt sein.

Ein Liner (Trennpapier, Trennfolie) ist nicht Bestandteil eines Klebebandes sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Die Erfindung bezieht sich darüber hinaus besonders bevorzugt auf Mobilgeräte, da die erfindungsgemäß eingesetzte Klebemasse hier aufgrund ihrer unerwartet guten Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Typische Konfektionierformen der erfindungsgemäßen Haftklebemasse sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

### Prüfmethoden

Alle Messungen wurden, sofern nichts anderes angegeben ist, bei 23 °C und 50 % rel. Luftfeuchtigkeit durchgeführt.

### Test I- Verklebungsfestigkeit (Klebkraft)

Die Untersuchung erfolgt in Anlehnung an PSTC-1. Ein 2 cm breiter und 15 cm langer Streifen des 50 µm dicken Klebebandmusters wird auf einer seiner Klebemassenseiten mit einer 25 µm dicken PET-Folie abgedeckt und mit der anderen Klebebandseite auf eine polierte Stahlplatte (ASTM) verklebt. Durch fünfmaliges doppeltes Überrollen mittels einer 4 kg Rolle wird für eine definierte Verklebung gesorgt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Das Prüfklima beträgt 23°C +/- 3 °C / 50% +/- 5% r.H. Das Ergebnis ist der Mittelwert aus drei Einzelmessungen und wird in N/cm angegeben.

### Test II- Wärmescherfestigkeit (SAFT)

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

### Messprobenpräparation:

Das zu untersuchende Klebeband (50 µm Transfertape) wird mit einer der Klebemassenseiten auf eine 50 µm dicke Aluminiumfolie geklebt. Das so präparierte Klebeband wird auf eine Größe von 10 mm * 50 mm geschnitten.

Die zugeschnittene Klebebandprobe wird mit der anderen Klebemassenseite auf eine polierte, mit Aceton gereinigte Stahl-Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

### Messung:

Die zu messende Probe wird am unteren Ende mit einem Gewicht von 50 g belastet. Die Stahl-Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test III- Schockresistenz (Ball-Drop)

Dieser Test lässt Aussagen über die Schockresistenz oder Stoßbeständigkeit ("Shock Resistance") der mit dem erfindungsgemäßen Klebeband beziehungsweise mit Vergleichsproben verklebten Probemustern zu, die auf die Schockabsorptionsfähigkeit des Klebebandes zurückzuführen sind. Als Prüfmuster diente ein 50 µm dickes Transfertape. Aus dem zu untersuchenden doppelseitig klebende Klebeband wird eine quadratische, rahmenförmige Probe ausgeschnitten (Außenmaße 33 mm x 33 mm; Stegbreite 3,0 mm; Innenmaße (Fensterausschnitt) 27 mm x 27 mm). Diese Probe wird auf einen ABS-Rahmen (Außenmaße 50 mm x 50 mm; Stegbreite 12,5 mm; Innenmaße (Fensterausschnitt) 25 mm x 25 mm; Dicke 3 mm) geklebt. Auf der anderen Seite des doppelseitigen Klebebands wird ein PMMA-Fenster von 35 mm x 35 mm geklebt. Die Verklebung von ABS-Rahmen, Klebebandrahmen und PMMA-Fenster erfolgt derart, dass die geometrischen Zentren und die Diagonalen jeweils übereinanderliegen (Eck-auf-Eck). Die Verklebungsfläche beträgt 360 mm2. Die Verklebung wird für 5 s mit 10 bar gepresst und für 24 Stunden konditioniert bei 23 °C / 50 % relativer Feuchte gelagert.

Unmittelbar nach der Lagerung wird der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet ist und die PMMA-Scheibe frei hängend nach unten zeigt. Auf die so angeordnete Probe wird senkrecht aus einer Höhe von 250 cm (durch das Fenster des ABS-Rahmens hindurch) eine Stahlkugel (Durchmesser 15 mm, Masse 5,6 g) zentriert auf die PMMA-Scheibe fallen gelassen (Messbedingungen 23 °C, 50 % relative Feuchte). Mit jeder Probe werden drei Untersuchungen durchgeführt, sofern die PMMA-Scheibe sich nicht vorher gelöst hatte. Der Kugelfalltest gilt als bestanden, wenn sich die Verklebung bei keiner der drei Untersuchungen gelöst hat.

### Test IV - Glasübergangstemperatur (DSC)

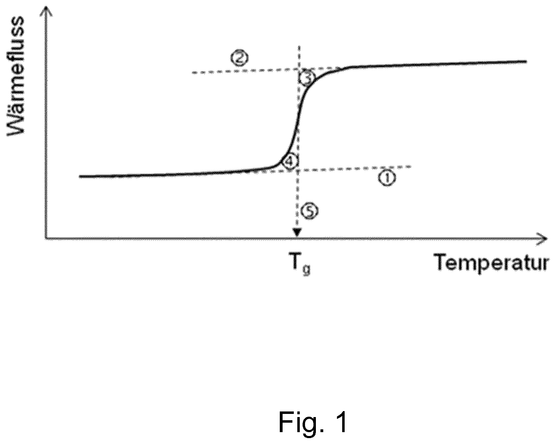

Die Glasübergangstemperatur von Polymerblöcken in Blockcopolymeren wird mittels dynamischer Scanning Kalorimetrie (DSC) bestimmt. Dazu werden ca. 5 mg der unbe¬handelten Blockcopolymerproben in ein Aluminiumtiegelchen (Volumen 25 µL) eingewo¬gen und mit einem gelochten Deckel verschlossen. Zur Messung wird ein DSC 204 F1 der Firma Netzsch verwendet und unter Stickstoff zur Inertisierung gearbeitet. Die Probe wird zunächst auf-150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenom¬men. Glasübergänge werden als Stufen im Thermogramm erkannt. Die Glasübergangs¬temperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Test V - Molmasse (GPC)

### (i) Peakmolmasse von einzelnen Blockcopolymermoden

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende anionische Poly¬merisation hergestellten Blockcopolymere sind die Molmassenverteilungen typischer¬weise ausreichend eng, so dass Polymermoden, die sich Triblockcopolymeren einerseits und Diblockcopolymeren andererseits zuordnen lassen, ausreichend voneinander aufgelöst im Elugramm auftreten. Es lässt sich dann die Peakmolmasse für die einzelnen Polymermoden aus den Elugrammen ablesen.

Peakmolmassen MP werden mittels Gelpermeationschromato¬graphie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁴ und 10⁶ mit jeweils ID 8,0 mm x 300 mm eingesetzt. Die Probenkonzentration beträgt 4 g/l, die Durchflussmenge 1,0 ml pro Minute. Es wird gegen PS Standards gemessen (µ = µm; 1 Å = 10⁻¹⁰ m).

### (ii) gewichtsmittlere Molmasse insbesondere von Klebharzen

Das gewichtsmittlere Molekulargewicht M_{w} wird mittels Gelpermeationschromato¬graphie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁴ und 10⁶ mit jeweils ID 8,0 mm x 300 mm eingesetzt. Die Probenkonzentration beträgt 4 g/l, die Durchflussmenge 1,0 ml pro Minute. Es wird gegen PS Standards gemessen (µ = µm; 1 A = 10⁻¹⁰ m).

### Test VI - Harzverträglichkeit (DACP)

Der DACP ist der Diacetonalkohol-Trübungspunkt und wird durch Abkühlen einer erhitzten Lösung von 5 g Harz, 5 g Xylol und 5 g Diacetonalkohol bis zu dem Punkt bestimmt, bei dem die Lösung trübe wird.

Zur Bestimmung von DACP-Werten wird zudem auf C. Donker, PSTC Annual Technical Seminar, Proceedings, S. 149-164, Mai 2001, verwiesen.

### Test VII - Harzverträglichkeit (MMAP)

MMAP ist der gemischte-Methylcyclohexan-Anilin-Trübungspunkt, der unter Verwendung eines modifizierten ASTM C 611-Verfahrens bestimmt wird. Methylcyclohexan wird statt des in dem Standard-Prüfverfahren verwendeten Heptans eingesetzt. Das Verfahren verwendet Harz/Anilin/Methylcyclohexan in einem Verhältnis von 1/2/1 (5 g/10 ml/5 ml) und der Trübungspunkt wird durch Abkühlen einer erhitzten, klaren Mischung der drei Komponenten, bis die vollständige Trübung gerade eintritt, bestimmt.

Zur Bestimmung von MMAP-Werten wird zudem auf C. Donker, PSTC Annual Technical Seminar, Proceedings, S. 149-164, Mai 2001, verwiesen.

### Test VIII - Harzerweichungstemperatur (Ring and Ball)

Die Klebharzerweichungstemperatur wird nach der einschlägigen Methodik ermittelt, die als Ring & Ball bekannt ist und nach ASTM E28 standardisiert ist.

### Test IX - Schmelzviskosität

Zur Bestimmung der Schmelzviskosität der Weichharze wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.

### Beispiele

Die erfindungsgemäße Haftklebemasse wird nachfolgend in bevorzugter Ausführung anhand mehrerer Beispiele beschrieben, ohne damit die Erfindung irgendeiner Beschränkung unterwerfen zu wollen.

Des Weiteren sind Vergleichsbeispiele aufgeführt, in denen untaugliche Klebemassen dargestellt sind.

Zur Herstellung der Muster wurden die jeweils erforderlichen Rohstoffe in ein Musterglas eingewogen und mit Lösemittel versetzt. Der Lösemittelanteil betrug 60 Gew.-% und die Lösemittelzusammensetzung 15 Teile Aceton, 30 Teile Toluol, 55 Teile Siedegrenzenbenzin (Siedebereich 60 °C bis 95 °C). Durch Rotation der Mustergläser für 48 h bei 23 °C ergab sich eine homogene Lösung. Bei Einsatz eines Farbmittels wurde das Pigment der Lösung zugesetzt und mittels eines Hochgeschwindigkeitsdispensers vom Typ Ultra-Turrax^{®} der Firma IKA für 15 min eindispergiert. Diese Lösung wurde mittels eines Laborstreichtischs auf eine silikonisierte Polyesterfolie beschichtet und anschließend für 20 min bei 120 °C getrocknet, so dass eine Haftklebemasseschicht von 50 µm Dicke resultierte. Dieser Schicht wurde entweder eine weitere Lage einer silikonisierten Polyesterfolie zulaminiert oder eine Lage einer 23 µm Dicken geätzten Polyesterfolie.

### Eingesetzte Rohstoffe:

**Elastomerkomponente (a)**

| | | Beitrag zu (a1) | Beitrag zu (a2) | Beitrag zu (a3) |
|---|---|---|---|---|
| Kraton D1118 (Kraton Polymers) | Lineares Polystyrol-Polybutadien Blockcopolymer | 78 % | 22 % | 0% |
| Kraton D1119 (Kraton Polymers) | Lineares Polystyrol-Polyisopren Blockcopolymer | 66 % | 34 % | 0% |
| Calprene C411 (Dynasol) | Radiales Polystyrol-Polybutadien Blockcopolymer | 20 % | 80 % | 0% |
| Kraton D1116 (Kraton Polymers) | Radiales Polystyrol-Polybutadien Blockcopolymer | 16% | 84 % | 0% |
| Kraton D1101 (Kraton Polymers) | Lineares Polystyrol-Polybutadien Blockcopolymer | 16% | 84 % | 0% |
| Kraton D1126 (Kraton Polymers) | Radiales Polystyrol-Polyisopren Blockcopolymer | 30 % | 70 % | 0% |
| Kraton D1102 (Kraton Polymers) | Lineares Polystyrol-Polybutadien Blockcopolymer | 17 % | 0% | 83 % |

| | | | | |
|---|---|---|---|---|
| (alle %-Angaben in Gew.-%) | | | | |

**Harzkomponente (b)**

| | | |
|---|---|---|
| Dercolyte A115 | DRT | α-Pinen Harz |
| Piccolyte A135 | Pinova | α-Pinen Harz |
| Regalite R1125 | Eastman | Vollhydriertes C9-Kohlenwasserstoffharz |

**Weicharzkomponente (c)**

| | | |
|---|---|---|
| Piccolyte A25 | Pinova | Flüssiges Terpen Harz |
| Wingtack 10 | Cray Valley | Flüssiges C5 Kohlenwasserstoffharz |

**Weitere Bestandteile (d)**

| | | |
|---|---|---|
| Irganox 1010 | BASF SE | Primäres Antioxidant |
| Irgafos 168 | BASF SE | Sekundäres Antioxidant |
| Printex 25 | Orion Engineered Carbons | Farbruß |

**Erfindungsgemäß:**

| | Beispiel 1 | Beispiel 2 | Beispiel 3 | Beispiel 4 | Beispiel 5 | Beispiel 6 | Beispiel 7 | Beispiel 8 | Beispiel 9 |
|---|---|---|---|---|---|---|---|---|---|
| | | | | | | | | | |
| Kraton D1118 | 35,0 % | 33,0 % | 43,0 % | 49,0 % | 46,0 % | 43,0 % | 38,0 % | 34,0 % | 35,0 % |
| | | | | | | | | | |
| Calprene C416 | | | | | | 15,0 % | | 15,0 % | 18,0 % |
| Kraton D1116 | 11,0% | 27,0 % | | 9,0 % | 12,0 % | | 20,0 % | | |
| Kraton D1101 | | | 17,0 % | | | | | | |
| | | | | | | | | | |
| Kraton D1102 | 14,0 % | | | | | | | 5,0 % | 10,0 % |
| | | | | | | | | | |
| Dercolyte A115 | 34,0 % | 37,0 % | 37,0 % | 37,0 % | | 35,0 % | 37,0 % | 40,5 % | |
| Piccolyte A135 | | | | | 37,0 % | | | | 36,0 % |
| | | | | | | | | | |
| Piccolyte A25 | | | | | | | 4,0 % | 4,5 % | |
| Wingtack 10 | 5,0 % | 2,0 % | 2,0 % | 4,0 % | 4,0 % | 4,0 % | | | |
| | | | | | | | | | |
| Irganox 1010 | 0,5 % | 0,5 % | 0,5 % | 0,5 % | 0,5 % | 0,5 % | 0,5 % | 0,5 % | 0,5 % |
| Irgafos 168 | 0,5 % | 0,5 % | 0,5 % | 0,5 % | 0,5 % | 0,5 % | 0,5 % | 0,5 % | 0,5 % |
| Printex 25 | | | | | | 2,0 % | | | |
| | | | | | | | | | |
| Elastomeranteil (a)* | 60,0 % | 60,0 % | 60,0 % | 58,0 % | 58,0 % | 58,0 % | 58,0 % | 54,0 % | 63,0 % |
| | | | | | | | | | |
| Anteil (a2) in (a)* | 28,2 % | 49,9 % | 39,6 % | 31,6 % | 34,8 % | 37,0 % | 43,4 % | 36,1 % | 35,1 % |
| | | | | | | | | | |
| Anteil (a3) in (a)* | 19,4 % | 0,0 % | 0,0 % | 0,0 % | 0,0 % | 0,0 % | 0,0 % | 7,7 % | 13,2 % |
| | | | | | | | | | |
| Verhältnis (a) zu [(b) + (c)]* | 1,54 : 1,00 | 1,54 : 1,00 | 1,54 : 1,00 | 1,41: 1,00 | 1,41 : 1,00 | 1,49 : 1,00 | 1,41 : 1,00 | 1,20 : 1,00 | 1,75: 1,00 |
| | | | | | | | | | |
| Anteil (b) in [(b)+(c)]* | 87,2 % | 94,9 % | 94,9 % | 90,2 % | 90,2 % | 89,7 % | 90,2 % | 90,0 % | 100 % |
| | | | | | | | | | |
| Klebkraft [N/cm] | 5,8 | 6,6 | 8,8 | 8,1 | 7,9 | 7,7 | 7,1 | 8,0 | 5,2 |
| | | | | | | | | | |
| SAFT [°C] | 144 | 149 | 140 | 139 | 140 | 142 | 145 | 137 | 152 |
| | | | | | | | | | |
| Ball-Drop [cm] | >250 | >250 | >250 | 239 | 238 | 238 | 237 | 184 | >250 |
| | | | | | | | | | |

| | | | | | | | | | |
|---|---|---|---|---|---|---|---|---|---|
| (%-Angaben in Gew.-%) *) aus Rezepturangaben berechnete Werte | | | | | | | | | |

**Vergleich:**

| | Vergleich 1 | Vergleich 2 | Vergleich 3 | Vergleich 4 | Vergleich 5 | Vergleich 6 | Vergleich 7 | Vergleich 8 |
|---|---|---|---|---|---|---|---|---|
| | | | | | | | | |
| Kraton D1118 | 27,0 % | 0,0 % | 59,5 % | 0,0 % | 0,0 % | 30,0 % | | |
| Kraton D1119 | | | | | | | 20,0 % | 35,0 % |
| | | | | | | | | |
| Kraton D1116 | 20,0 % | 59,5 % | | 25,0 % | 43,0 % | 2,0 % | | |
| Kraton D1126 | | | | | | | 35,0 % | 20,0 % |
| | | | | | | | | |
| Kraton D1102 | 2,0 % | | | 15,0 % | | 28,0 % | | |
| | | | | | | | | |
| Dercolyte A115 | 50,0 % | 39,5 % | 39,5 % | 58,0 % | 50,0 % | 20,0 % | | |
| Regalite R1125 | | | | | | | 42,0 % | 42,0 % |
| | | | | | | | | |
| Wingtack 10 | | | | 1,0 % | 6,0 % | 19,0 % | 2,0 % | 2,0 % |
| | | | | | | | | |
| Irganox 1010 | 0,5 % | 0,5 % | 0,5 % | 0,5 % | 0,5 % | 0,5 % | 0,5 % | 0,5 % |
| Irgafos 168 | 0,5 % | 0,5 % | 0,5 % | 0,5 % | 0,5 % | 0,5 % | 0,5 % | 0,5 % |
| | | | | | | | | |
| Elastomeranteil (a)* | 49,0 % | 59,5 % | 59,5 % | 40,0 % | 43,0 % | 60,0 % | 55,0 % | 55,0 % |
| | | | | | | | | |
| Anteil (a2) in (a)* | 46,4 % | 84,0 % | 22,0 % | 52,5 % | 84,0 % | 14,0 % | 56,9 % | 47,1 % |
| | | | | | | | | |
| Anteil (a3) in (a)* | 3,4 % | 0,0 % | 0,0 % | 31,1 % | 0,0 % | 38,7 % | 0,0 % | 0,0 % |
| | | | | | | | | |
| Verhältnis (a) zu [(b) + (c)]* | 1,00 : 1,02 | 1,51 : 1,00 | 1,51 : 1,00 | 1,00 : 1,47 | 1,00 : 1,30 | 1,54 : 1,00 | 1,25 : 1,00 | 1,25 : 1,00 |
| | | | | | | | | |
| Anteil (b) in [(b)+(c)]* | 100,0% | 100,0% | 100,0% | 98,3% | 89,3% | 51,3% | 95,5% | 95,5% |
| | | | | | | | | |
| Klebkraft [N/cm] | 10,9 | 2,6 | 9,4 | 10,3 | 10,0 | 2,8 | 11,4 | 9,0 |
| | | | | | | | | |
| SAFT [°C] | 145 | 171 | 134 | 129 | 144 | 126 | 117 | 119 |
| | | | | | | | | |
| Ball-Drop [cm] | 90 | 190 | 130 | 50 | 30 | 90 | 150 | 120 |
| | | | | | | | | |
| Anteil (a2) in (a)* | 46,4 % | 84,0 % | 22,0 % | 52,5 % | 84,0 % | 14,0 % | 56,9 % | 47,1 % |
| | | | | | | | | |
| Anteil (a3) in (a)* | 3,4 % | 0,0 % | 0,0 % | 31,1 % | 0,0 % | 38,7 % | 0,0 % | 0,0 % |
| | | | | | | | | |
| Verhältnis (a) zu [(b) + (c)]* | 1,00: 1,02 | 1,51 : 1,00 | 1,51 : 1,00 | 1,00 : 1,47 | 1,00: 1,30 | 1,54 : 1,00 | 1,25: 1,00 | 1,25: 1,00 |
| | | | | | | | | |
| Anteil (b) in [(b)+(c)]* | 100,0% | 100,0% | 100,0% | 98,3% | 89,3% | 51,3% | 95,5% | 95,5% |
| | | | | | | | | |
| Klebkraft [N/cm] | 10,9 | 2,6 | 9,4 | 10,3 | 10,0 | 2,8 | 11,4 | 9,0 |
| | | | | | | | | |
| SAFT [°C] | 145 | 171 | 134 | 129 | 144 | 126 | 117 | 119 |
| | | | | | | | | |
| Ball-Drop [cm] | 90 | 190 | 130 | 50 | 30 | 90 | 150 | 120 |
| | | | | | | | | |

| | | | | | | | | |
|---|---|---|---|---|---|---|---|---|
| (%-Angaben in Gew.-%) *) aus Rezepturangaben berechnete Werte (%-Angaben in Gew.-%) *) aus Rezepturangaben berechnete Werte | | | | | | | | |

## Patentansprüche

1. Blockcopolymerhaltige Haftklebemasse enthaltend
a) 52 Gew.-% bis 65 Gew.-%, bevorzugt 55 Gew.-% bis 62 Gew.-% einer Elastomerkomponente,
b) 30 Gew.-% bis 45 Gew.-%, bevorzugt 35 Gew.-% bis 42 Gew.-% zumindest eines Klebharzes,
c) 0 Gew.-% bis 15 Gew.-%, bevorzugt bis 10 Gew.-% zumindest eines Weichharze und
d) 0 Gew.-% bis 18 Gew.-%, bevorzugt bis 10 Gew.-% an weiteren Additiven,
wobei die Elastomerkomponente (a) zu mindestens 90 Gew.-% aus Polyvinylaromat-Polybutadien-Blockcopolymeren besteht, wobei die Polyvinylaromat-Polybutadien-Blockcopolymeren zumindest eine Sorte eines Diblockcopolymers (a1) und zumindest eine Sorte eines Tri- oder Multiblockcopolymers (a2) umfassen,
das zumindest eine Diblockcopolymer (a1) einen Vinylaromatenanteil von 15 Gew.-% bis 45 Gew.-% aufweist,
innerhalb der Elastomerkomponente (a) der Anteil an Tri- oder Multiblockcopolymer (a2) zwischen 25 Gew.-% und 50 Gew.-%, bevorzugt zwischen 30 Gew.-% und 45 Gew.-% beträgt,
das Tri- oder Multiblockcopolymer (a2) eine Molmasse von mindestens 125.000 g/mol und einen Vinylaromatenanteil von 15 Gew.-% bis 45 Gew.-% aufweist und
die eine Sorte des Tri- oder Multiblockcopolymers bevorzugt ein mehrarmiges (radiales) Blockcopolymer ist.

2. Blockcopolymerhaltige Haftklebemasse nach Anspruch 1,
**dadurch gekennzeichnet, dass**
das zumindest eine Diblockcopolymer (a1) eine Molmasse von mindestens 80.000 g/mol und/oder einen Vinylaromatenanteil von 20 Gew.-% bis 40 Gew.-% aufweist.

3. Blockcopolymerhaltige Haftklebemasse nach zumindest einem der Ansprüche 1 bis 2,
**dadurch gekennzeichnet, dass**
das zumindest eine Tri- oder Multiblockcopolymer (a2), bevorzugt mehrarmige (radiale) Blockcopolymer, eine Molmasse von mindestens 150.000 g/mol und/oder einen Vinylaromatenanteil von 20 Gew.-% bis 40 Gew.-% aufweist.

4. Blockcopolymerhaltige Haftklebemasse nach zumindest einem der Ansprüche 1 bis 3,
**dadurch gekennzeichnet, dass**
das zumindest eine Diblockcopolymer (a1) eine Molmasse von mindestens 80.000 g/mol und einen Vinylaromatenanteil von 20 Gew.-% bis 40 Gew.-% aufweist und
das zumindest eine Tri- oder Multiblockcopolymer (a2), bevorzugt mehrarmige (radiale) Blockcopolymer, eine Molmasse von mindestens 150.000 g/mol und einen Vinylaromatenanteil von 20 Gew.-% bis 40 Gew.-% aufweist.

5. Blockcopolymerhaltige Haftklebemasse nach zumindest einem der vorhergehenden Ansprüche,
**dadurch gekennzeichnet, dass**
die Elastomerkomponente (a) zusätzlich ein weiteres Polyvinylaromat-Polybutadien-Blockcopolymer (a3) enthält, das im Rohzustand eine Zugfestigkeit von mindestens 25 MPa (nach ISO 37) und eine Molmasse von höchstens 120 000 g/mol aufweist,
wobei der Anteil des Blockcopolymers (a3) innerhalb der Elastomerkomponente (a) höchstens 35 Gew.-%, bevorzugt höchstens 25 Gew.-% beträgt.

6. Blockcopolymerhaltige Haftklebemasse nach zumindest einem der vorhergehenden Ansprüche,
**dadurch gekennzeichnet, dass**
das Einsatzverhältnis von Elastomerkomponente (a) zu Harzkomponente [(b) + (c)] bei 1,20 : 1,00 bis 2,00 : 1,00, bevorzugt bei 1,35 : 1,00 bis 1,80 : 1,00, weiter bevorzugt bei 1,50 : 1,00 bis 1,75 : 1,00 liegt.

7. Blockcopolymerhaltige Haftklebemasse nach zumindest einem der vorhergehenden Ansprüche,
**dadurch gekennzeichnet, dass**
das Einsatzverhältnis von Klebharzkomponente (b) in Harzkomponente [(b) + (c)] bei mindestens 70 Gew.-%, bevorzugt bei mindestens 80 Gew.-%, bis 100 Gew.-% liegt.

8. Blockcopolymerhaltige Haftklebemasse nach zumindest einem der vorhergehenden Ansprüche,
**dadurch gekennzeichnet, dass**
die Polybutadien-Polyvinylaromaten-Blockcopolymere solche sind, die Polymerblöcke überwiegend gebildet von Vinylaromaten (A-Blöcke), bevorzugt Styrol, und solchen überwiegend gebildet durch Polymerisation von 1,3-Butadien (B-Blöcke) enthalten.

9. Blockcopolymerhaltige Haftklebemasse nach zumindest einem der vorhergehenden Ansprüche,
**dadurch gekennzeichnet, dass**
das Tri- oder Multiblockcopolymer (a2) die allgemeine Struktur aufweist
A-B-A, (A-B)ₙ, (A-B)ₙX oder (A-B-A)ₙX,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von Butadien, oder für ein teilhydriertes Derivat eines solchen Polymers;
- X für den Rest eines Kopplungsreagenzes oder Initiators und
- n für eine ganze Zahl ≥ 2, insbesondere 3 oder 4 steht.

10. Blockcopolymerhaltige Haftklebemasse nach zumindest einem der vorhergehenden Ansprüche,
**dadurch gekennzeichnet, dass**
das Tri- oder Multiblockcopolymer (a2) eine radiale Gestalt aufweist oder sternförmig oder linear ist.

11. Blockcopolymerhaltige Haftklebemasse nach zumindest einem der vorhergehenden Ansprüche,
**dadurch gekennzeichnet, dass**
das zumindest eine Klebharz folgende Eigenschaften aufweist:
• ein gewichtsmittleres Molekulargewicht 500 bis 5.000 g/mol, bevorzugt von 500 bis 2.000 g/mol
• ein DACP-Wert (nach Test VI) von mindestens etwa +5 °C und höchstens etwa +50°C
• ein MMAP-Wert (nach Test VII) von mindestens etwa +50 °C und höchstens etwa +85 °C und/oder
• eine Harzerweichungstemperatur (nach Test VIII) von mindestens etwa +90 °C

12. Blockcopolymerhaltige Haftklebemasse nach zumindest einem der vorhergehenden Ansprüche,
**dadurch gekennzeichnet, dass**
das zumindest eine Weichharz folgende Eigenschaften aufweist:
• eine Schmelzviskosität bei 25 °C und 1 Hz von zumindest 25 Pa*s, bevorzugt von zumindest 50 Pa*s und/oder
• eine Erweichungstemperatur von < 25 °C.

13. Verwendung einer Haftklebemasse nach zumindest einem der vorhergehenden Ansprüche in einem permanentträgerlosen Haftklebestreifen.

14. Verwendung einer Haftklebemasse nach zumindest einem der vorhergehenden Ansprüche in einem Haftklebestreifen, wobei der Haftklebstreifen einen permanenten Träger aufweist, auf den ein- oder beidseitig die Haftklebemasse aufgebracht ist.

15. Verwendung einer Haftklebemasse nach Anspruch 14, wobei der Haftklebstreifen einen dehnbaren permanenten Träger aufweist.

16. Verbund aus einem Haftklebestreifen gemäß der Ansprüche 13 bis 15 und zwei Bauteilen eines Mobilgerätes, die mit dem Haftklebestreifen verbunden sind.

## Claims

1. Block copolymer-containing pressure-sensitive adhesive comprising
a) 52 wt% to 65 wt%, preferably 55 wt% to 62 wt%, of an elastomer component,
b) 30 wt% to 45 wt%, preferably 35 wt% to 42 wt%, of at least one tackifier resin,
c) 0 wt% to 15 wt%, preferably up to 10 wt%, of at least one plasticizing resin, and
d) 0 wt% to 18 wt%, preferably up to 10 wt%, of further additives,
wherein the elastomer component (a) consists to an extent of at least 90 wt% of polyvinylaromatic-polybutadiene block copolymers, the polyvinylaromatic-polybutadiene block copolymers comprising at least one kind of a diblock copolymer (a1) and at least one kind of a triblock or multiblock copolymer (a2),
the at least one diblock copolymer (a1) has a vinylaromatic fraction of 15 wt% to 45 wt%,
within the elastomer component (a) the fraction of triblock or multiblock copolymer (a2) is between 25 wt% and 50 wt%, preferably between 30 wt% and 45 wt%,
the triblock or multiblock copolymer (a2) has a molar mass of at least 125 000 g/mol and a vinylaromatic fraction of 15 wt% to 45 wt%, and the one kind of the triblock or multiblock copolymer is preferably a multiarm (radial) block copolymer.

2. Block copolymer-containing pressure-sensitive adhesive according to Claim 1,
**characterized in that**
the at least one diblock copolymer (a1) has a molar mass of at least 80 000 g/mol and/or a vinylaromatic fraction of 20 wt% to 40 wt%.

3. Block copolymer-containing pressure-sensitive adhesive according to at least one of Claims 1 to 2,
**characterized in that**
the at least one triblock or multiblock copolymer (a2), preferably multiarm (radial) block copolymer, has a molar mass of at least 150 000 g/mol and/or a vinylaromatic fraction of 20 wt% to 40 wt%.

4. Block copolymer-containing pressure-sensitive adhesive according to at least one of Claims 1 to 3,
**characterized in that**
the at least one diblock copolymer (a1) has a molar mass of at least 80 000 g/mol and a vinylaromatic fraction of 20 wt% to 40 wt% and
the at least one triblock or multiblock copolymer (a2), preferably multiarm (radial) block copolymer, has a molar mass of at least 150 000 g/mol and a vinylaromatic fraction of 20 wt% to 40 wt%.

5. Block copolymer-containing pressure-sensitive adhesive according to at least one of the preceding claims,
**characterized in that**
the elastomer component (a) additionally comprises a further polyvinylaromatic-polybutadiene block copolymer (a3) which in the crude state has a tensile strength of at least 25 MPa (according to ISO 37) and a molar mass of at most 120 000 g/mol, wherein the fraction of the block copolymer (a3) within the elastomer component (a) is at most 35 wt%, preferably at most 25 wt%.

6. Block copolymer-containing pressure-sensitive adhesive according to at least one of the preceding claims,
**characterized in that**
the usage ratio of elastomer component (a) to resin component [(b) + (c)] is 1.20 : 1.00 to 2.00 : 1.00, preferably 1.35 : 1.00 to 1.80 : 1.00, more preferably 1.50 : 1.00 to 1.75 : 1.00.

7. Block copolymer-containing pressure-sensitive adhesive according to at least one of the preceding claims,
**characterized in that**
the usage ratio of tackifier resin component (b) in resin component [(b) + (c)] is at least 70 wt%, preferably at least 80 wt%, to 100 wt%.

8. Block copolymer-containing pressure-sensitive adhesive according to at least one of the preceding claims,
**characterized in that**
the polybutadiene-polyvinylaromatic block copolymers are copolymers comprising polymer blocks predominantly formed from vinylaromatics (A blocks), preferably styrene, and those predominantly formed by polymerization of 1,3-butadiene (B blocks).

9. Block copolymer-containing pressure-sensitive adhesive according to at least one of the preceding claims,
**characterized in that**
the triblock or multiblock copolymer (a2) has the general structure
A-B-A, (A-B)ₙ, (A-B)ₙX or (A-B-A)ₙX,
in which
- the blocks A independently of one another are a polymer formed by polymerization of at least one vinylaromatic;
- the blocks B independently of one another are a polymer formed by polymerization of butadiene, or are a partially hydrogenated derivative of such a polymer;
- X is the radical of a coupling reagent or initiator, and
- n is an integer ≥ 2, more particularly 3 or 4.

10. Block copolymer-containing pressure-sensitive adhesive according to at least one of the preceding claims,
**characterized in that**
the triblock or multiblock copolymer (a2) has a radial architecture or is star-shaped or linear.

11. Block copolymer-containing pressure-sensitive adhesive according to at least one of the preceding claims,
**characterized in that**
the at least one tackifier resin has the following properties:
• a weight-average molecular weight 500 to 5000 g/mol, preferably of 500 to 2000 g/mol
• an DACP (according to Test VI) of at least about +5°C and at most about +50°C
• an MMAP (according to Test VII) of at least about +50°C and at most about +85°C and/or
• a resin softening temperature (according to Test VIII) of at least about +90°C.

12. Block copolymer-containing pressure-sensitive adhesive according to at least one of the preceding claims,
**characterized in that**
the at least one plasticizing resin has the following properties:
• a melt viscosity at 25°C and 1 Hz of at least 25 Pa*s, preferably of at least 50 Pa*s and/or
• a softening temperature of < 25°C.

13. Use of a pressure-sensitive adhesive according to at least one of the preceding claims in a pressure-sensitive adhesive strip devoid of permanent carrier.

14. Use of a pressure-sensitive adhesive according to at least one of the preceding claims in a pressure-sensitive adhesive strip, wherein the pressure-sensitive adhesive strip has a permanent carrier on which the pressure-sensitive adhesive has been applied on one or both sides.

15. Use of a pressure-sensitive adhesive according to Claim 14, wherein the pressure-sensitive adhesive strip has an extensible permanent carrier.

16. Assembly composed of a pressure-sensitive adhesive strip according to Claims 13 to 15 and two components of a mobile device which are joined to the pressure-sensitive adhesive strip.

## Revendications

1. Masse autoadhésive contenant des copolymères à blocs, contenant
a) 52% en poids à 65% en poids, de préférence 55% en poids à 62% en poids d'un composant élastomère,
b) 30% en poids à 45% en poids, de préférence 35% en poids à 42% en poids d'au moins une résine adhésive,
c) 0% en poids à 15% en poids, de préférence jusqu'à 10% en poids d'au moins une résine molle, et
d) 0% en poids à 18% en poids, de préférence jusqu'à 10% en poids d'autres adhésifs,
le composant élastomère (a) étant constitué à raison d'au moins 90% en poids de copolymères à blocs de poly(aromatique de vinyle)-polybutadiène, les copolymères à blocs de poly(aromatique de vinyle)-polybutadiène comprenant au moins un type d'un copolymère à deux blocs (a1) et au moins un type d'un copolymère à trois blocs ou à blocs multiples (a2),
ledit au moins un copolymère à deux blocs (a1) présentant une proportion d'aromatique de vinyle de 15% en poids à 45% en poids,
la proportion de copolymère à trois blocs ou à blocs multiples (a2) dans le composant élastomère (a) étant située entre 25% en poids et 50% en poids, de préférence entre 30% en poids et 45% en poids,
le copolymère à trois blocs ou à blocs multiples (a2) présentant une masse molaire d'au moins 125.000 g/mole et une proportion d'aromatique de vinyle de 15% en poids à 45% en poids et
ledit un type de copolymère à trois blocs ou à blocs multiples étant de préférence un copolymère à blocs (radial) à plusieurs bras.

2. Masse autoadhésive contenant des copolymères à blocs selon la revendication 1, **caractérisée en ce que** ledit au moins un copolymère à deux blocs (a1) présente une masse molaire d'au moins 80.000 g/mole et/ou une proportion d'aromatique de vinyle de 20% en poids à 40% en poids.

3. Masse autoadhésive contenant des copolymères à blocs selon au moins l'une quelconque des revendications 1 à 2, **caractérisée en ce que** ledit au moins un copolymère à trois blocs ou à blocs multiples (a2), de préférence ledit copolymère à blocs (radial) à plusieurs bras, présente une masse molaire d'au moins 150.000 g/mole et/ou une proportion d'aromatique de vinyle de 20% en poids à 40% en poids.

4. Masse autoadhésive contenant des copolymères à blocs selon au moins l'une quelconque des revendications 1 à 3, **caractérisée en ce que** ledit au moins un copolymère à deux blocs (a1) présente une masse molaire d'au moins 80.000 g/mole et une proportion d'aromatique de vinyle de 20% en poids à 40% en poids et **en ce que** ledit au moins un copolymère à trois blocs ou à blocs multiples (a2), de préférence ledit copolymère à blocs (radial) à plusieurs bras, présente une masse molaire d'au moins 150.000 g/mole et une proportion d'aromatique de vinyle de 20% en poids à 40% en poids.

5. Masse autoadhésive contenant des copolymères à blocs selon au moins l'une quelconque des revendications précédentes, **caractérisée en ce que** le composant élastomère (a) contient en outre un autre copolymère à blocs de poly(aromatique vinyle)-polybutadiène (a3) qui présente à l'état brut une résistance à la traction d'au moins 25 MPa (selon la norme ISO 37) et une masse molaire d'au plus 120.000 g/mole,
la proportion du copolymère à blocs (a3) dans le composant élastomère (a) représentant au plus 35% en poids, de préférence au plus 25% en poids.

6. Masse autoadhésive contenant des copolymères à blocs selon au moins l'une quelconque des revendications précédentes, **caractérisée en ce que** le rapport d'utilisation du composant élastomère (a) aux composants de résine [(b)+(c)] se situe à 1,20:1,00 jusqu'à 2,00:1,00, de préférence à 1,35:1,00 jusqu'à 1,80:1,00, plus préférablement à 1,50:1,00 jusqu'à 1,75:1,00.

7. Masse autoadhésive contenant des copolymères à blocs selon au moins l'une quelconque des revendications précédentes, **caractérisée en ce que** le rapport d'utilisation du composant de résine adhésive (b) dans le composant de résine [(b)+(c)] se situe à au moins 70% en poids, de préférence à au moins 80% en poids, jusqu'à 100% en poids.

8. Masse autoadhésive contenant des copolymères à blocs selon au moins l'une quelconque des revendications précédentes, **caractérisée en ce que** les copolymères à blocs de polybutadiène-poly(aromatique de vinyle) sont des copolymères qui contiennent des blocs polymères essentiellement formés d'aromatiques de vinyle (blocs A), de préférence le styrène, et ceux essentiellement formés par polymérisation de 1,3-butadiène (blocs B).

9. Masse autoadhésive contenant des copolymères à blocs selon au moins l'une quelconque des revendications précédentes, **caractérisée en ce que** le copolymère à trois blocs ou à blocs multiples (a2) présente la structure générale
A-B-A, (A-B)ₙ, (A-B)ₙX ou (A-B-A)ₙX,
dans laquelle
- les blocs A représentent, indépendamment les uns des autres, un polymère formé par polymérisation d'au moins un aromatique de vinyle ;
- les blocs B représentent, indépendamment les uns des autres, un polymère formé par polymérisation de butadiène ou un dérivé partiellement hydrogéné d'un tel polymère ;
- X représente le radical d'un réactif de couplage ou d'un initiateur et
- n vaut un nombre entier ≥ 2, en particulier 3 ou 4.

10. Masse autoadhésive contenant des copolymères à blocs selon au moins l'une quelconque des revendications précédentes, **caractérisée en ce que** le copolymère à trois blocs ou à blocs multiples (a2) présente une configuration radiale ou est en forme d'étoile ou linéaire.

11. Masse autoadhésive contenant des copolymères à blocs selon au moins l'une quelconque des revendications précédentes, **caractérisée en ce que** ladite au moins une résine adhésive présente les propriétés suivantes :
- un poids moléculaire numérique moyen de 500 à 5000 g/mole, de préférence de 500 à 2000 g/mole,
- une valeur DACP (selon le test VI) d'au moins environ +5°C et d'au plus environ +50°C,
- une valeur MMAP (selon le test VII) d'au moins environ +50°C et d'au plus environ +85°C et/ou
- une température de ramollissement de la résine (selon le test VIII) d'au moins environ +90°C.

12. Masse autoadhésive contenant des copolymères à blocs selon au moins l'une quelconque des revendications précédentes, **caractérisée en ce que** ladite au moins une résine molle présente les propriétés suivantes :
- une viscosité en masse fondue à 25°C et à 1 Hz d'au moins 25 Pa.s, de préférence d'au moins 50 Pa.s et/ou
- une température de ramollissement < 25°C.

13. Utilisation d'une masse autoadhésive selon au moins l'une quelconque des revendications précédentes dans un ruban autoadhésif sans support permanent.

14. Utilisation d'une masse autoadhésive selon au moins l'une quelconque des revendications précédentes dans un ruban autoadhésif, le ruban autoadhésif présentant un support permanent sur lequel est appliquée, sur une face ou sur les deux faces, la masse autoadhésive.

15. Utilisation d'une masse autoadhésive selon la revendication 14, le ruban autoadhésif présentant un support permanent extensible.

16. Composite d'un ruban autoadhésif selon les revendications 13 à 15 et de deux composants d'un appareil mobile qui sont assemblés par le ruban autoadhésif.
